# EUROPEAN PATENT SPECIFICATION

(11) **EP 1 312 529 B1**
(45) Date of publication and mention of the grant of the patent: **12.09.2007**
(21) Application number: 02025237.5
(22) Date of filing: 12.11.2002
(51) Int. Cl.: B61H 1/00, B60T 1/04, B61H 13/24

(54) **A clasp brake**
Klotzbremse
Frein à sabot

(30) Priority: 16.11.2001 SE 0103813
(43) Date of publication of application: 21.05.2003
(73) Proprietor: Sab Wabco AB, 261 24 Landskrona (SE)
(72) Inventor: Emilsson, Fred, 231 00 Trelleborg (SE); Haag, Magnus, 212 32 Malmö (SE)
(74) Representative: Petri, Stellan

(56) References cited:
- AU-B- 541 461
- DE-A- 4 235 807
- FR-A- 1 416 088
- FR-A- 2 437 328
- US-A- 2 900 050
- US-A- 4 596 311

## Description

### Technical Field

The present invention relates to a clasp brake for a railway vehicle, comprising - for suspension at opposite sides of a wheel set of the vehicle -
a first and a second brake beam provided at each respective end with a brake block holder with a brake block for braking engagement with the wheel treads in the wheel set,
a pulling brake unit in a first brake beam, and
means connecting the second brake beam with the pull rod of the brake unit.

### Background of the Invention

A problem with clasp brakes of the above kind with brake beams at either side of a wheel set of a railway vehicle is that the wheel axle of the wheel set will prevent the connecting means between the second brake beam and the brake unit pull rod from being a straight rod or the like, as would otherwise be natural.

A previously known solution to the above problem is shown in Fig 1 in DE-C-1 204 254, where the connecting means are pull bands extending symmetrically at either side of the wheel axle.

It is also known in clasp brakes to provide connecting means below the wheel axle, normally near each wheel, an example being shown in DE-C-28 54 564, which does not, however, fall literally under the above clasp brake definition.

In rail vehicle designs the space available at and around the wheel set may be extremely limited for different reasons, and the earlier solutions to the above problem may not be applicable.

### The Invention

The problem to transmit the pulling force between the two brake beams, when the space under the wheel axle and at the wheels is limited and when a cheap, light and sturdy, but yet effective design is desired, may according to the invention be solved in that the connecting means is a yoke extending over the wheel axle in the wheel set.

In a clasp brake of this type it is important that the two brake beams can adopt positions, which to a certain extent are independent of each other, due for example to different wear of the different brake blocks. This freedom may according to the invention be attained in that the yoke is pivotably connected to the pull rod and the second brake beam around mutually perpendicular axes.

In order to keep the yoke, which is preferably formed of two parallel plates, in a proper position over the wheel axis, a guide rod attached to the yoke extends into a support mounted on the first brake beam.

### The Drawings

The invention will be described in further detail below under reference to the accompanying drawings, in which:
Fig 1 is a side view of a clasp brake according to the invention,
Fig 2 is a top view of this clasp brake,
Fig 3 is a side view partly in section and to a larger scale of the attachment to the right of a clasp yoke to the brake beam to the right in Figs 1 and 2, and
Fig 4 is a top view of the attachment shown in Fig 3.

### Description of a Preferred Embodiment

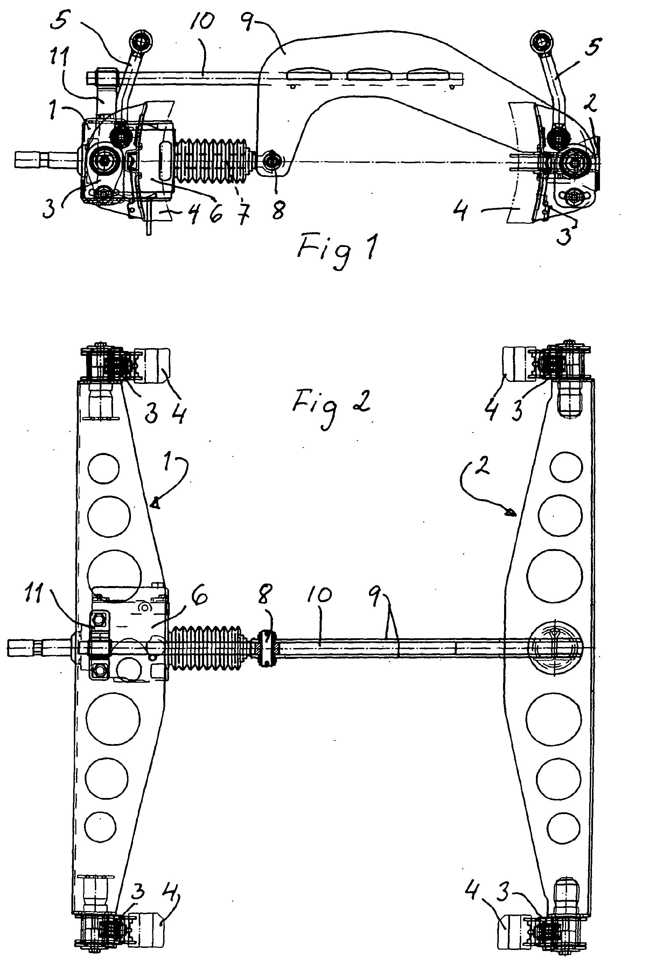

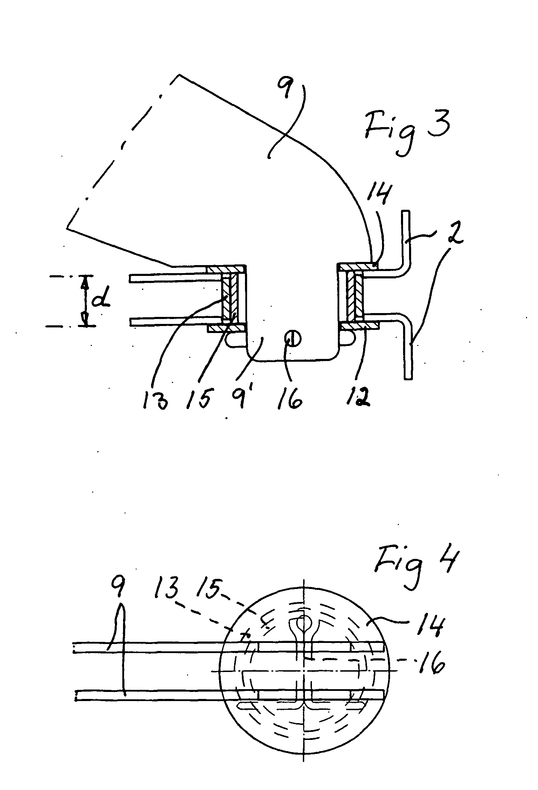

A clasp brake according to the invention comprises a first brake beam 1 and a second brake beam 2 (to the left and right, respectively, in Figs 1 and 2). Each brake beam 1 and 2 is at each end provided with a pivotable brake block holder 3 for a brake block 4. Suspension links 5 are at their respective lower ends pivotably attached to the brake block holders 3 and at their respective upper ends to suitable parts of a railway vehicle for which the clasp brake is intended.

The clasp brake is intended for mounting at each side of a wheel set (not shown) comprising two wheels on a wheel axle, the brake beams 1, 2 being parallel with the wheel axle and the brake blocks 4 being intended for braking engagement with the treads of the wheels.

The design of the brake beams 1, 2, the brake block holders 3, and the suspension links 5 is not described in detail here; reference is instead made to WO01/36247 revealing a so called bogie brake with many design features in common with the present clasp brake. It may, however, here be noted that the brake beams 1, 2 are built up of plate material.

In the present case the first brake beam 1 has a U-profile, and centrally positioned in this U-beam is a pulling brake unit 6, which is preferably pneumatically operated. The pull rod 7 of this brake unit 6 is pivotally connected by means of a pivot pin 8 to a yoke 9, which at its opposite end is connected to the second brake beam 2 in a way to be described under reference to Figs 3 and 4. The purpose of the yoke 9 is to connect the brake beams 1, 2 to each other but at the same time give room for the wheel axle between the two beams.

The yoke 9 may as shown be comprised of two plates at a certain distance from each other. In the formed interspace between the two plates a guide rod 10 is attached and extends slidably into a support 11 therefor mounted on the first brake beam 1. The purpose of the guide rod 10 is to keep the yoke 9 in its shown horisontal position when no brake force is generated (above the wheel axle; not shown).

As is most clearly shown in Fig 3, the second brake beam 2 may comprise two generally L-shaped plate profiles, suitably interconnected by members (not shown) and by an insert 13 to be described.

The attachment of the clasp yoke 9 to the second brake beam 2 is shown in Figs 3 and 4. The respective end of the two plates forming the yoke 9 is formed as a pin 9' for extending down into coaxial, circular holes in the profiles forming the second brake beam 2. A cylindrical insert 13 is attached in the holes.

In order to allow relative movements between the brake beam 2 and the yoke 9 but at the same time ensure a certain guiding and prevent the different parts from wearing out, the attachment comprises two washers 12 and 14, the latter being welded to the yoke 9 and a cylindrical sleeve 15, being welded to the upper washer 14.

The washers 12 and 14 may as shown be circular, and their diameter is larger than the diameter of the holes in the beam 2. Suitable openings are provided in the washers 12 and 14 for insertion of the yoke pins 9'.

The sleeve 15 has an outer diameter that is slightly smaller than the inner diameter of the insert 13 and a length that is slightly larger than the external dimension d of the brake beam 2 in Fig 3.

A clevis pin 16 is arranged in bores in the lower end of the yoke pins 9' immediately below the lower washer 12 for attaching the yoke 9 to the second brake beam 2.

The result of this arrangement is that relative movements between the second brake beam 2 and the yoke 9 are permitted, especially around an axis perpendicular to the brake beam 2 or in other words a vertical axis. As the axis of the pivot pin 8 at the opposite end of the yoke 9 is horisontal, certain relative movements of the different parts will be allowed, while at the same time a proper guiding will be ensured.

## Claims

1. A clasp brake for a railway vehicle, comprising - for suspension at opposite sides of a wheel set of the vehicle -
a first and a second brake beam (1, 2) provided at each respective end with a brake block holder (3) with a brake block (4) for braking engagement with the wheel treads in the wheel set,
a pulling brake unit (6) in the first brake beam (1), and
means (9) connecting the second brake beam (2) with the pull rod (7) of the brake unit (6),
**characterized in that** the connecting means is a yoke (9) extending over the wheel axle in the wheel set.

2. A clasp brake according to claim 1, **characterized in that** the yoke (9) is pivotably connected to the pull rod (7) and the second brake beam (2) around mutually perpendicular axes.

3. A clasp brake according to claim 2, **characterized in that** the yoke (9) is connected to the brake unit pull rod (7) by means of a horisontal pivot pin (8) and to the second brake beam (2) by means of an attachment arrangement (12-16) with a vertical pivot axis.

4. A clasp brake according to claim 3, **characterized in that** the attachment arrangement (12-16) includes a cylindrical insert (13) in a vertical hole in the brake beam (2) and a cylindrical sleeve (15) with washers (12, 14) at a vertical end portion (9*'*) of the yoke (9), the sleeve (15) having a smaller outer diameter than the inner diameter of the insert (13).

5. A clasp brake according to claim 4, **characterized in that** a clevis pin (16) is arranged at the lover end of the end portion (9') of the yoke (9) for keeping the attachment arrangement (12-16) fastened to the brake beam (2).

6. A clasp brake according to claim 1, **characterized in that** the yoke (9) is formed of two parallel plates and that a guide rod (10) attached to the yoke extends slidingly into a support (11) mounted on the first brake beam (1).

## Patentansprüche

1. Zangenbremse für ein Schienenfahrzeug, die - zur Aufhängung an entgegengesetzten Seiten eines Radsatzes des Fahrzeugs - umfasst
einen ersten und einen zweiten Bremsbalken (1, 2), die an jedem jeweiligen Ende mit einem Bremsklotzhalter (3) mit einem Bremsklotz (4) zum Bremseingriff mit den Radspuren im Radsatz versehen sind,
eine Zugbremseinheit (6) im ersten Bremsbalken (1), und
ein Mittel (9), das den zweiten Bremsbalken (2) mit der Zugstange (7) der Bremseinheit (6) verbindet,
**dadurch gekennzeichnet, dass** das Verbindungsmittel ein Joch (9) ist, das sich über die Radachse im Radsatz erstreckt.

2. Zangenbremse nach Anspruch 1, **dadurch gekennzeichnet, dass** das Joch (9) mit der Zugstange (7) und dem zweiten Bremsbalken (2) um zueinander senkrechte Achsen schwenkbar verbunden ist.

3. Zangenbremse nach Anspruch 2, **dadurch gekennzeichnet, dass** das Joch (9) mit der Bremseinheitszugstange (7) mittels eines horizontalen Drehzapfens (8) und mit dem zweiten Bremsbalken (2) mittels einer Befestigungsanordnung (12-16) mit einer vertikalen Drehachse verbunden ist.

4. Zangenbremse nach Anspruch 3, **dadurch gekennzeichnet, dass** die Befestigungsanordnung (12-16) einen zylindrischen Einsatz (13) in einem vertikalen Loch im Bremsbalken (2) und eine zylindrische Hülse (15) mit Unterlegscheiben (12, 14) an einem vertikalen Endteil (9') des Jochs (9) umfasst, wobei die Hülse (15) einen kleineren Außendurchmesser als den Innendurchmesser des Einsatzes (13) aufweist.

5. Zangenbremse nach Anspruch 4, **dadurch gekennzeichnet, dass** ein Schäkelzapfen (16) am unteren Ende des Endteils (9') des Jochs (9) angeordnet ist, um die Befestigungsanordnung (12-16) am Bremsbalken (2) befestigt zu halten.

6. Zangenbremse nach Anspruch 1, **dadurch gekennzeichnet, dass** das Joch (9) aus zwei parallelen Platten gebildet ist und dass sich eine Führungsstange (10), die am Joch befestigt ist, gleitend in einen Träger (11) erstreckt, der am ersten Bremsbalken (1) montiert ist.

## Revendications

1. Frein à sabot pour un véhicule ferroviaire, comprenant - pour suspension au niveau de côtés opposés d'un ensemble de roues du véhicule -
des première et seconde poutres-freins (1, 2) pourvues, à chaque extrémité respective, d'un porte-sabot de frein (3) équipé d'un sabot de frein (4) pour engagement de freinage avec les bandes de roulement de roues de l'ensemble de roues,
un module (6) de traction de frein situé dans la première poutre-frein (1), et
un moyen (9) de liaison de la seconde poutre-frein (2) et de la tige (7) de traction du module (6) de frein,
**caractérisé en ce que** le moyen de liaison est une mâchoire (9) s'étendant au-dessus de l'essieu de roues de l'ensemble de roues.

2. Frein à sabot selon la revendication 1, **caractérisé en ce que** la mâchoire (9) est liée de façon pivotante à la tige (7) de traction et à la seconde poutre-frein (9) autour d'axes mutuellement perpendiculaires.

3. Frein à sabot selon la revendication 2, **caractérisé en ce que** la mâchoire (9) est liée à la tige (7) de traction de module de frein au moyen d'une broche (8) de pivot horizontale et à la seconde poutre-frein (2) au moyen d'un agencement (12-16) d'assujettissement pourvu d'un axe de pivot vertical.

4. Frein à sabot selon la revendication 3, **caractérisé en ce que** l'agencement (12-16) d'assujettissement inclut un insert cylindrique (13) situé dans un trou vertical de la poutre-frein (2) et une douille cylindrique (15) dotée de rondelles (12, 14) au niveau d'une partie (9') d'extrémité verticale de la mâchoire (9), la douille (15) ayant un diamètre extérieur plus petit que le diamètre intérieur de l'insert (13).

5. Frein à sabot selon la revendication 4, **caractérisé en ce qu'**un axe de chape (16) est agencé au niveau de l'extrémité inférieure de la partie (9') d'extrémité de la mâchoire (9) pour maintenir l'agencement (12-16) d'assujettissement fixé à la poutre-frein (2).

6. Frein à sabot selon la revendication 1, **caractérisé en ce que** la mâchoire (9) est formée de deux plaques parallèles et **en ce qu'**une tige (10) de guidage assujettie à la mâchoire s'étend de manière glissante dans un support (11) monté sur la première poutre-frein (1).
